# EUROPÄISCHE PATENTANMELDUNG

(11) **EP 4 275 964 A1**
(43) Veröffentlichungstag der Anmeldung: **15.11.2023**
(21) Anmeldenummer: 23171948.5
(22) Anmeldetag: 05.05.2023
(51) Int. Cl.: B60R 16/02, B60R 16/023, H01H 85/00, H02G 5/00

(54) **VORRICHTUNG ZUR ELEKTRISCHEN LEISTUNGSVERTEILUNG FÜR EIN KRAFTFAHRZEUG**

(30) Priorität: 12.05.2022 DE 102022204677
(71) Anmelder: LEONI Bordnetz-Systeme GmbH, 97318 Kitzingen (DE); LEONI Wiring Systems Slovakia spol. s r.o., 911 01 Trencin (SK)
(72) Erfinder: ENDRES, Michael, 97070 Würzburg (DE); FALASTA, Stefan, 911 01 Trencin (SK); HILLENKÖTTER, Sven, 97508 Untereuerheim (DE); KORTE, Matthias, 97084 Würzburg (DE); MARKERT, Jonathan, 97234 Reichenberg (DE); SOOSAI DAS, Gerard, 97070 Würzburg (DE)
(74) Vertreter: FDST Patentanwälte

(57) **Zusammenfassung**

Die Erfindung betrifft eine Vorrichtung (2) zur elektrischen Leistungsverteilung für ein Kraftfahrzeug (4) aufweisend eine durch eine Stromschiene (12) gebildete Hauptleitung sowie aufweisend eine Sicherungsbox (30) mit mehreren Nebenleitungs-Anschlüssen (28), welche über Sicherungselemente (46,48) der Sicherungsbox (30) abgesichert sind, wobei die Stromschiene (12) ein Schienenende aufweist, das in einem Gehäuse (32) der Sicherungsbox (30) angeordnet ist und wobei die Sicherungselemente (46,48) entweder direkt mit dem Schienenende verbunden sind oder durch das Schienenende mit ausgebildet sind

## Beschreibung

Die Erfindung betrifft eine Vorrichtung zur elektrischen Leistungsverteilung für ein Kraftfahrzeug.

Bei Kraftfahrzeugen sind Ausführungen von Bordnetzen bekannt, bei denen das Bordnetz einen Hauptversorgungsstrang aufweist, über welchen elektrische Leistung insbesondere zwischen einem vorderen Teilnetz und einem hinteren Teilnetz im Kraftfahrzeug übertragen werden kann. Ein solcher Hauptversorgungsstrang wird auch als Energie-Backbone, Versorgungs-Backbone oder kurz Backbone bezeichnet.

In einigen Fällen ist ein entsprechender Hauptversorgungsstrang hierbei ausgebildet durch eine Stromschienen-Anordnung, welche auch als Mehrfachschiene bezeichnet wird. Je nach Anwendungsfall ist eine derartige Stromschienen-Anordnung dabei ausgelegt für Ströme größer 100 A und/oder Leitungsübertragungen bis zu 150 kW.

Ausgehend hiervon liegt der Erfindung die Aufgabe zugrunde, eine vorteilhaft ausgebildete Vorrichtung zur elektrischen Leistungsverteilung für ein Kraftfahrzeug anzugeben.

Diese Aufgabe wird erfindungsgemäß gelöst durch eine Vorrichtung mit den Merkmalen des Anspruchs 1. Bevorzugte Weiterbildungen sind in den rückbezogenen Ansprüchen enthalten.

Die erfindungsgemäße Vorrichtung ist dabei ausgebildet zur Übertragung von elektrischer Leistung und ausgelegt für die Verwendung in einem Kraftfahrzeug. Im verbauten Zustand ist die Vorrichtung daher typischerweise Teil eines Bordnetzes eines Kraftfahrzeugs und somit dann auch Teil des Kraftfahrzeugs.

Weiter bildet die Vorrichtung zumindest im verbauten Zustand üblicherweise einen eingangs genannten Hauptversorgungsstrang aus oder zumindest mit aus, welcher auch als Energie-Backbone, Versorgungs-Backbone oder kurz Backbone bezeichnet wird. Im verbauten Zustand erstreckt sich der entsprechende Hauptversorgungsstrang dann üblicherweise von einem vorderen Teil des Kraftfahrzeugs zu einem hinteren Teil des Kraftfahrzeugs und verbindet dabei typischerweise ein vorderes Teilnetz des Bordnetzes mit einem hinteren Teilnetz. Daher erstreckt sich der Hauptversorgungsstrang üblicherweise über eine Länge von zumindest 1,0 m oder von zumindest 1,5 m.

Jener Hauptversorgungsstrang ist weiterhin in den meisten Fällen zumindest im verbauten Zustand Teil eines Gleichspannungs-Bordnetzes oder eines Gleichspannungs-Teilnetzes und ist dementsprechend bevorzugt für einen Gleichspannungsbetrieb ausgebildet.

Der Hauptversorgungsstrang ist zudem je nach Anwendungsfall ausgelegt für eine Betriebsspannung oder Nennspannung kleiner 60 V, beispielsweise 12V oder 48V. Alternativ ist der Hauptversorgungsstrang ausgelegt für eine Betriebsspannung oder Nennspannung im Bereich von mehreren 100 V, also zum Beispiel im Bereich von 300 V bis 1000 V. Weiter ist der Hauptversorgungsstrang bevorzugt ausgelegt für eine Durchleitung hoher Ströme, also Ströme größer gleich 20 A, weiter bevorzugt größer gleich 50 A und insbesondere größer gleich 100 A. Außerdem ist der Hauptversorgungsstrang typischerweise ausgelegt für Leistungs-übertragungen im Bereich von 1 kW bis hin zu mehreren 100 kW. Bevorzugt ist der Hauptversorgungsstrang dabei zumindest ausgelegt für Leistungsübertragungen größer gleich 5 kW, weiter bevorzugt größer gleich 50 kW und insbesondere größer gleich 100 kW.

Davon unabhängig weist die erfindungsgemäße Vorrichtung eine Sicherungsbox mit mehreren, also zwei oder mehr, Nebenleitungs-Anschlüssen für Nebenleitungen auf. Hierbei sind die Nebenleitungs-Anschlüsse über Sicherungselemente der Sicherungsbox abgesichert. Von den Nebenleitungs-Anschlüssen gehen dann zumindest im verbauten Zustand der Vorrichtung Nebenleitungen ab, welche typischerweise durch Kabel ausgebildet sind. Die entsprechenden Nebenleitungen sind dabei je nach Anwendungsfall ebenfalls Teil der erfindungsgemäßen Vorrichtung oder sie werden beim Verbau der erfindungsgemäßen Vorrichtung mit dieser verbunden.

Zudem weist die erfindungsgemäße Vorrichtung eine durch eine Stromschiene ausgebildete Hauptleitung auf. Jene Hauptleitung oder Hauptversorgungsleitung bildet dabei typischerweise den zuvor genannten Hauptversorgungsstrang mit aus. Dabei ist die Hauptleitung im Hauptversorgungsstrang üblicherweise ergänzt durch zumindest eine zweite Leitung, die insbesondere als Masseleitung dient. Je nach Anwendungsfall sind die Hauptleitung und die zweite Leitung hierbei durch zwei insbesondere als Schienen ausgebildete Flachleiter ausgebildet, die zum Beispiel zusammen mit einem die beiden Flachleiter trennenden Isolator eine Sandwich-Struktur ausbilden.

Weiterhin weist die Stromschiene, welche die Hauptleitung ausbildet, ein Schienenende auf, welches in einem Gehäuse der Sicherungsbox angeordnet ist und welches entweder direkt mit den Sicherungselementen verbunden ist oder welches die Sicherungselemente mit ausbildet.

An der Stromschiene ist allgemein die Sicherungsbox angeschlossen. Die Stromschiene verläuft also - bis auf das Schienenende - außerhalb der Sicherungsbox und ist an dieser angeschlossen. Die Stromschiene dringt durch eine Wandung des Gehäuses in die Sicherungsbox hinein, wird also von außen das Gehäuse der Sicherungsbox hineingeführt, so dass das Schienenende innerhalb des Gehäuses angeordnet ist. Es ist keine Kontaktierungs-Schnittstelle zur Sicherungsbox, wie beispielsweise eine Schraubkontaktierung außerhalb der Sicherungsbox vorgesehen. Die Stromschiene wird daher unterbrechungsfrei und ohne Kontaktierungs-Schnittstelle unmittelbar in die Sicherungsbox eingeführt.

Durch die integrale Ausbildung des Sicherungselements als Teil des Schienenendes oder durch die unmittelbare Verbindung des Sicherungselementes mit dem eingeführten Schienenende entfällt die Notwendigkeit einer sonst üblichen zusätzlichen Strom- oder Verteilerschiene innerhalb der Sicherungsbox. Damit ist die Teilevielfalt reduziert und der Aufwand für die Konfektionierung ist gering. Bevorzugt ist daher auf eine zusätzliche Stromschiene innerhalb der Sicherungsbox verzichtet, insbesondere ist auf eine zusätzliche Stromschiene verzichtet, die einerseits über einen ersten Anschluss an dem Schienenende und andererseits über zumindest einen zweiten Anschluss mit einem Sicherungselement verbunden ist.

Bei einer Sandwich-Struktur des Hauptversorgungsstrangs mit einer (zusätzlichen) Masseschiene endet diese gemäß einer bevorzugten Ausgestaltung außerhalb der Sicherungsbox, wird also - anders als die Hauptleitung (Plusleitung) nicht in die Sicherungsbox eingeführt und auch nicht direkt elektrisch mit dieser kontaktiert. Beispielsweise wird die Masseschiene - speziell in unmittelbarer Nähe der Sicherungsbox - mit einer Masseleitung, z.B. einem Karrosseriebauteil elektrisch leitend verbunden.

Gemäß zumindest einer bevorzugten Ausführungsvariante sind dabei die genannten Sicherungselemente als Schmelzsicherungen ausgebildet und weisen jeweils einen Schmelzleiter auf. Bildet dann das Schienenende die Sicherungselemente zumindest mit aus, so bildet das Schienenende die Schmelzleiter der Sicherungselemente aus, d. h., dass die Schmelzleiter in das Schienenende integriert sind.

Von Vorteil sind weiter Ausführungen der Vorrichtung, bei denen die Stromschiene in einer Längsrichtung lang gestreckt ist. In vorteilhafter Weiterbildung erstreckt sich dann jedes der zuvor genannten Sicherungselemente in der Längsrichtung von einem Hauptleitungs-Anschluss des Sicherungselements zu einem Nebenleitungs-Anschluss des Sicherungselements. Außerdem bevorzugt erstrecken sich sämtliche Sicherungselemente der Sicherungsbox oder zumindest sämtliche mit dem Schienenende direkt verbundenen Sicherungselemente der Sicherungsbox in der Längsrichtung jeweils von einem Hauptleitungs-Anschluss zu einem Nebenleitungs-Anschluss.

Davon unabhängig ist das Schienenende bevorzugt gebildet durch ein Verteiler-Blatt. Jenes Verteiler-Blatt ist dabei bevorzugt als ein monolithisches Verteiler-Blatt ausgebildet und weist zum Beispiel mehrere Anschluss-Arme auf, die sich insbesondere in Längsrichtung erstrecken. Weiter bevorzugt wird das Verteiler-Blatt ergänzt durch einen Schienenstrang der Stromschiene. Jener Schienenstrang ist dabei typischerweise in Längsrichtung langestreckt und ist zum Beispiel ausgebildet durch einen Flachleiter. Zudem bevorzugt ist der Schienenstrang als ein monolithischer Schienenstrang ausgebildet.

Je nach Anwendungsfall handelt es sich bei dem Verteiler-Blatt und dem Schienenstrang um unabhängig voneinander vorgefertigte Bauteile, die beispielsweise durch Verschrauben, durch Vernieten, durch Bördeln oder mittels Durchsetzfügen miteinander verbunden sind.

Vorteilhaft sind weiter Ausführungen der Vorrichtung, bei denen das Verteiler-Blatt sowie der Schienenstrang zwei Abschnitte der Stromschiene ausbilden, die nicht zerstörungsfrei voneinander lösbar sind. Hierbei ist dann das Verteiler-Blatt weiter bevorzugt stoffschlüssig mit dem Schienenstrang der Stromschiene verbunden. In den meisten Ausführungsvarianten ist die stoffschlüssige Verbindung dann durch Schweißen insbesondere durch Ultraschallschweißen ausgebildet.

Einer weiteren Ausführungsvariante entsprechend bilden das Verteiler-Blatt und der Schienenstrang zwei Abschnitte einer Stromschiene aus, welche als monolithische Stromschiene ausgebildet ist.

Ist die Stromschiene nicht als monolithische Stromschiene ausgebildet, so besteht das Verteiler-Blatt bevorzugt aus einem höherfesten Material als der Schienenstrang. Unabhängig davon besteht der Schienenstrang beispielsweise aus Aluminium oder einer Aluminiumlegierung. Das Verteiler-Blatt besteht je nach Ausführungsvariante zum Beispiel aus Aluminium, aus einer Aluminiumlegierung, aus Kupfer oder aus einer Kupferlegierung.

Weiter bevorzugt ist der Schienenstrang hergestellt durch Zuschnitt von Meterware, also insbesondere durch Zuschnitt eines Strangprofils, beispielsweise mit quaderförmigem Querschnitt.

Zweckdienlich sind weiter Ausführungen der Vorrichtung, bei denen der Schienenstrang in Längsrichtung langgestreckt ist, bei denen sich das Verteiler-Blatt in Längsrichtung an den Schienenstrang anschließt, bei denen sich der Schienenstrang weiter über eine breite Bs in einer Querrichtung quer zur Längsrichtung erstreckt, bei denen sich das Verteiler-Blatt über eine Breite B_{B} in Querrichtung erstreckt und bei denen die Breite B_{B} größer als die breite Bs ist. Dabei liegt das Verhältnis von Bs zu Bs bevorzugt in einem Bereich von 1,0 bis 3,0 und insbesondere in einem Bereich von 1,5 bis 2,0.

Weiter erstreckt sich das Verteiler-Blatt typischerweise über eine Länge L_{B} in Längsrichtung, wobei die Breite B_{B} bevorzugt größer als die Länge L_{B} ist. Zweckdienlich sind dabei vor allem Ausgestaltungen, bei denen das Verhältnis von B_{B} zu L_{B} in einem Bereich von 1,2 bis 3,0 liegt und insbesondere bei denen das Verhältnis in einem Bereich von 1,5 bis 2,0 liegt.

Wie bereits zuvor angedeutet weist jedes der zuvor genannten Sicherungselemente typischerweise einen Hauptleitungs-Anschluss sowie einen Nebenleitungs-Anschluss auf. Je nach Anwendungsfall ist dabei zumindest ein solcher Hauptleitungs-Anschluss stoffschlüssige mit dem Verteiler-Blatt verbunden und in einigen Ausführungsvarianten sind alle diese Hauptleitungs-Anschlüsse stoffschlüssige mit dem Verteiler-Blatt verbunden, also zum Beispiel verschweißt. Alternativ sind zwischen den Hauptleitungs-Anschlüssen und dem Verteiler-Blatt beispielsweise Schraubverbindungen ausgebildet.

Zusätzlich zu den zuvor beschriebenen Sicherungselementen weist die Sicherungsbox in einigen Ausführungsvarianten zumindest ein weiteres Sicherungselement auf, welches als ein pyrotechnischen Schutzschalter ausgebildet ist und welches insbesondere mit dem Schienenende verbunden ist. Bei einem solchen pyrotechnischen Schutzschalter, auch pyrotechnisches Sicherungselement genannt, handelt es sich nicht um eine Schutzvorrichtung zur Absicherung eines Strompfades gegen Überströme, wie dies bei Schmelzsicherungen der Fall ist. Stattdessen handelt es sich bei dem pyrotechnischen Schutzschalter, auch pyrotechnischer Sicherheitsschalter, pyrotechnisches Trennelement oder kurz pyrotechnischer Schalter genannt, um eine Art Notausschalter der Stopp-Kategorie 0 (EN ISO 13850:2008 Pkt. 4.1.4 und EN 60204-1:2006 Pkt. 9.2.2), welcher sich manuell auslösen lässt und/oder unter vorgegebenen Bedingungen automatisch angesteuert und ausgelöst wird.

Auch der pyrotechnische Schutzschalter weist dann typischerweise einen Hauptleitungs-Anschluss sowie einen Nebenleitungs-Anschluss auf, wobei der pyrotechnische Schutzschalter über den Hauptleitungs-Anschluss üblicherweise mit dem Schienenende verbunden ist.

Jener Nebenleitung-Anschluss des pyrotechnischen Schutzschalters ist weiter gemäß zumindest einer Ausführungsvariante als ein Verteilerblech ausgebildet oder mit einem Verteilerblech verbunden. Dabei sind dann zweckdienlicherweise zwei oder mehr Nebenleitungs-Anschlüsse für Nebenleitungen mit dem Verteilerblech verbunden, von denen zumindest im verbauten Zustand der Vorrichtung Nebenleitungen abgehen, welche insbesondere durch Kabel ausgebildet sind. Außerdem bevorzugt ist zumindest zwischen einem der Nebenleitungs-Anschlüsse für Nebenleitungen und dem Verteilerblech ein Sicherungselement zwischengeschaltet, welches als Schmelzsicherung ausgebildet ist.

Vorteilhaft ist es weiter, wenn das Gehäuse der Sicherungsbox zwei Halbschalen aufweist, also zwei Gehäuse-Halbschalen. Zudem ist es vorteilhaft, wenn die Sicherungsbox eine Anzahl Aufnahmen aufweist, die mit dem Gehäuse der Sicherungsbox verklebt sind oder die in das Gehäuse eingegossen sind, also in das Material des Gehäuses eingebettet sind. Dabei sind die entsprechenden Aufnahmen zum Beispiel durch Gewindebolzen ausgebildet. Einer weiteren Ausführung entsprechend sind die Aufnahmen durch Schrauben ausgebildet oder durch Elemente mit ähnlicher Ausgestaltung. D. h., dass eine entsprechende Aufnahme typischerweise einen ersten Abschnitt aufweist, der durch einen Gewindebolzen ausgebildet ist, und einen sich daran anschließenden zweiten Abschnitt, der im Vergleich zum ersten Abschnitt verbreitert ist und der als eine Art Sockel dient, der mit dem Gehäuse verklebt oder in das Gehäuse eingegossen ist.

Alternativ weist die Sicherungsbox eine Anzahl Aufnahmen der zuvor genannten Art auf, die jedoch in dem Gehäuse der Sicherungsbox schwimmend gelagert sind, oder die Sicherungsbox selbst ist schwimmend gelagert. Die schwimmende Lagerung ist dabei insbesondere derart ausgestaltet, dass eine Verschiebung der Aufnahmen bzw. der Sicherungsbox in Längsrichtung ermöglicht ist. Mithilfe der schwimmenden Lagerung der Aufnahmen bzw. der Sicherungsbox lassen sich zum Beispiel mechanische Beschädigungen infolge einer thermischen Ausdehnung des Schienenstrangs vermeiden.

Eine Ausführung entsprechend erfolgt die schwimmende Lagerung hierbei durch eine Fixierung der Sicherungsbox mittels Schrauben in Langlöchern. Diese Langlöcher sind dabei zweckdienlicherweise in Längsrichtung langgestreckt und erstrecken sich zudem bevorzugt entlang der longitudinalen Fahrzeugrichtung. Die Länge der Langlöcher liegt dabei typischerweise im Bereich 10 bis 30 mm. Dadurch können Längenänderungen der Stromschiene oder des Schienenstrangs durch thermische Effekte und/oder Fertigungstoleranzen kompensiert und eine Beschädigung der Bauteile verhindert werden. Zudem bevorzugt wird in zumindest eines der Langlöcher eine Metallhülse, z.B. aus Messing, eingebracht, um die mechanischen Kräfte der Montage aufzunehmen. Dies kann durch Einspritzen oder Einprägen erfolgen.

Zudem ist es zweckdienlich, wenn das Gehäuse der Sicherungsbox abgedichtet ist, sodass der Innenraum vor einem Eindringen von Wasser und zudem bevorzugt auch von Feuchtigkeit geschützt ist. Für die abgedichtete Durchführung der Leitungen durch Öffnungen im Gehäuse der Sicherungsbox werden dabei beispielsweise sogenannte Labyrinthe genutzt. Die Abdichtung erfolgt hierbei bevorzugt gemäß der Norm IPX5.

Außerdem weist die Sicherungsbox in einigen Ausführungsvarianten zumindest einen Sensor oder ein Sensorelement auf. Der Sensor oder das Sensorelement ist dabei zum Beispiel ausgebildet für eine Temperaturmessung, eine Spannungsmessung oder eine Stromstärkemessung.

Ausführungsbeispiele der Erfindung werden nachfolgend anhand einer schematischen Zeichnung näher erläutert. Darin zeigen:
- FIG 1: in einer perspektivischen Seitenansicht eine Vorrichtung zur elektrischen Leistungsversorgung und mit einer Hauptleitung und mit einer Masseleitung,
- FIG 2: in einer Draufsicht eine Unterseite eines Kraftfahrzeugs mit der daran angeordneten Vorrichtung,
- FIG 3: in einer Schnittdarstellung die Masseleitung und die Hauptleitung,
- FIG 4: in einer perspektivischen Seitenansicht ausschnittsweise die Masseleitung und die Hauptleitung zusammen mit einer Leitungsschelle,
- FIG 5: in einer Innenraumansicht eine Sicherungsbox der Vorrichtung,
- FIG 6: in einer Draufsicht ein Verteiler-Blatt der Sicherungsbox,
- FIG 7: in einer Draufsicht ein Sicherungselement der Sicherungsbox ohne Sicherungs-Gehäuse sowie
- FIG 8: in einer perspektivischen Ansicht eine Gehäuse-Halbschale der Sicherungsbox mit mehreren Aufnahmen.

Einander entsprechende Teile sind in allen Figuren jeweils mit den gleichen Bezugszeichen versehen.

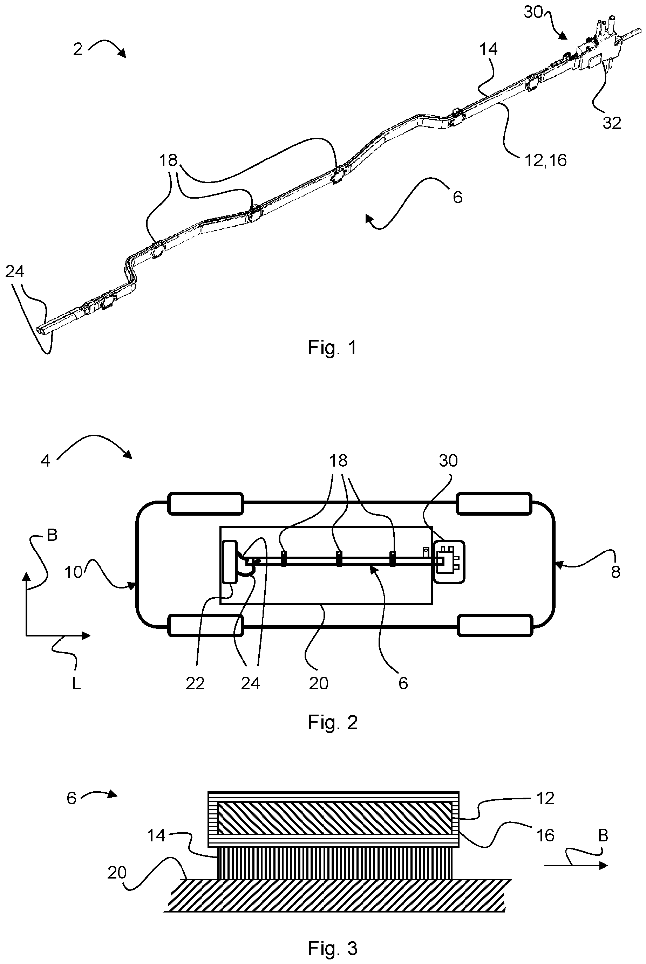

Eine nachfolgend exemplarisch beschriebene und in Fig. 1 abgebildete Vorrichtung 2 ist in einem Kraftfahrzeug 4 verbaut, welches in Fig. 2 gezeigt ist. Hier dient die Vorrichtung 2 als Teil eines nicht vollständig abgebildeten Bordnetzes zur Übertragung von elektrischer Leistung.

Dabei bildet die Vorrichtung 2 im Ausführungsbeispiel einen Hauptversorgungsstrang 6 aus, welcher sich in einer Längsrichtung L von einem vorderen Teil 8 des Kraftfahrzeugs 2 zu einem hinteren Teil 10 des Kraftfahrzeugs 2 erstreckt. Die Ausdehnung der Hauptversorgungsstrang 6 in Längsrichtung L beträgt hierbei mehr als 1,5 m.

Weiter weist der Hauptversorgungsstrang 6 eine Hauptleitung auf, welche durch eine Stromschiene 12 ausgebildet ist. Jene Hauptleitung ist im Hauptversorgungsstrang 6 ergänzt durch eine zweite Leitung, die als Masseleitung 14 dient. Dabei sind die Hauptleitung und die Masseleitung 14 im Ausführungsbeispiel durch zwei Flachleiter ausgebildet, die übereinander angeordnet sind und dabei durch einen Isolator 16 gegeneinander isoliert sind. Hierbei umhüllt der Isolator 16 die Stromschiene 12, welche die Hauptleitung ausbildet, zumindest in einem sich in Längsrichtung L erstreckenden Abschnitt vollständig. Dies ist in Fig. 3 angedeutet.

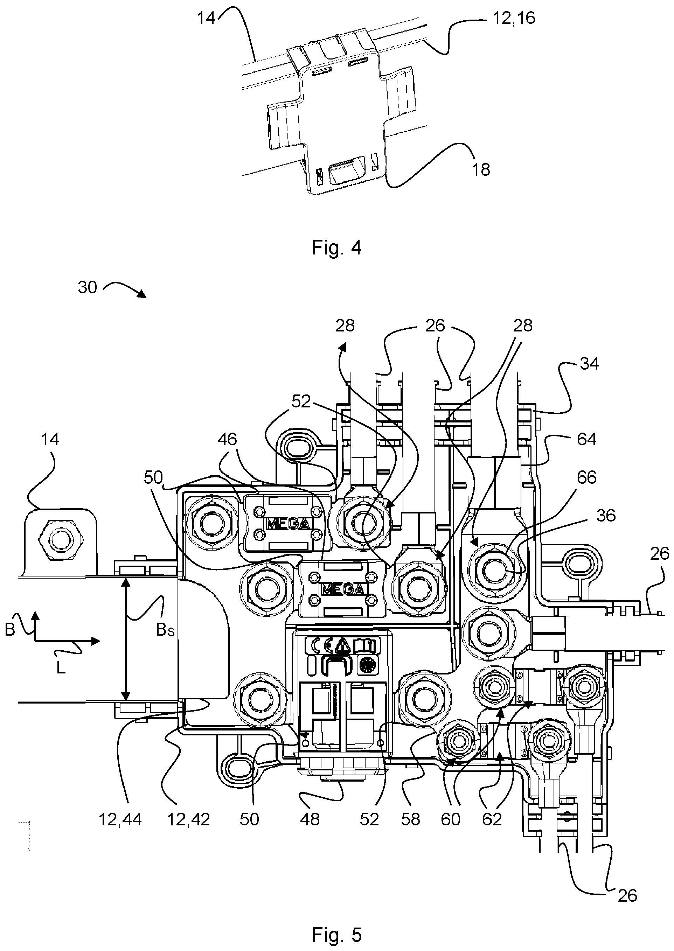

Gehalten werden die beiden Leitungen, also die Hauptleitung und die Masseleitung 14, im Ausführungsbeispiel durch mehrere Leitungsschellen 18, von denen eine in Fig. 4 gezeigt ist. Die Leitungsschellen 18 dienen dabei sowohl zur Fixierung der beiden Leitungen aneinander als auch zur Befestigung des Hauptversorgungsstrangs 6 am Chassis des Kraftfahrzeugs 4, also zum Beispiel an einem Unterboden 20. Die Leitungsschellen 18 weisen dazu bevorzugt Lamellen zur Fixierung der beiden Leitungen aneinander auf. Zudem bevorzugt sind die Leitungsschellen 18 derart am Chassis befestigt, dass eine schwimmende Lagerung zum Ausgleich thermischer Längenänderungen realisiert ist. Einer Ausführung entsprechend erfolgt die schwimmende Lagerung hierbei durch eine Fixierung der Leitungsschellen 18 am Chassis mittels Schrauben in Langlöchern der Leitungsschellen 18. Diese Langlöcher sind dabei zweckdienlicherweise in Längsrichtung L langgestreckt und erstrecken sich zudem bevorzugt entlang der longitudinalen Fahrzeugrichtung. Die Länge der Langlöcher liegt dabei typischerweise im Bereich 10 bis 30 mm.

Im Ausführungsbeispiel verbindet die Hauptversorgungsstrangs 6 weiter ein vorderes Teilnetz des Bordnetzes mit einem hinteren Teilnetz. Das hintere Teilnetz weist hierbei einen DC/DC-Wandler 22 auf, der über Kontaktanschlüsse 24 mit dem Hauptversorgungsstrang 6 verbunden ist und der über eine nicht mit abgebildete Batterie gespeist wird. Das vordere Teilnetz weist mehrere nicht dargestellte Verbraucher auf, die über Nebenleitungen 26 angebunden sind. Die Nebenleitungen 26 sind hierbei durch Kabel ausgebildet. Angeschlossen sind diese Nebenleitungen 26 an Nebenleitungs-Anschlüsse 28 einer Sicherungsbox 30, welche Teil der Vorrichtung 2 ist. Die Stromschiene 12 ist an der Sicherungsbox 30 angeschlossen. Sie ist von außen durch eine Wandung eines Gehäuses 32 der Sicherungsbox 30 in diese hineingeführt. Ein Schienenende der Stromschiene 12, wie es nachfolgend noch im Detail beschrieben wird, liegt im Gehäuse 32 ein.

Die Masseleitung 14 endet vorzugsweise vor der Sicherungsbox 30 und wird nicht in diese hineingeführt. Sie ist bevorzugt außerhalb der Sicherungsbox 30 an einem Masseanschluss, z.B. an einem Karosserieelement angeschlossen.

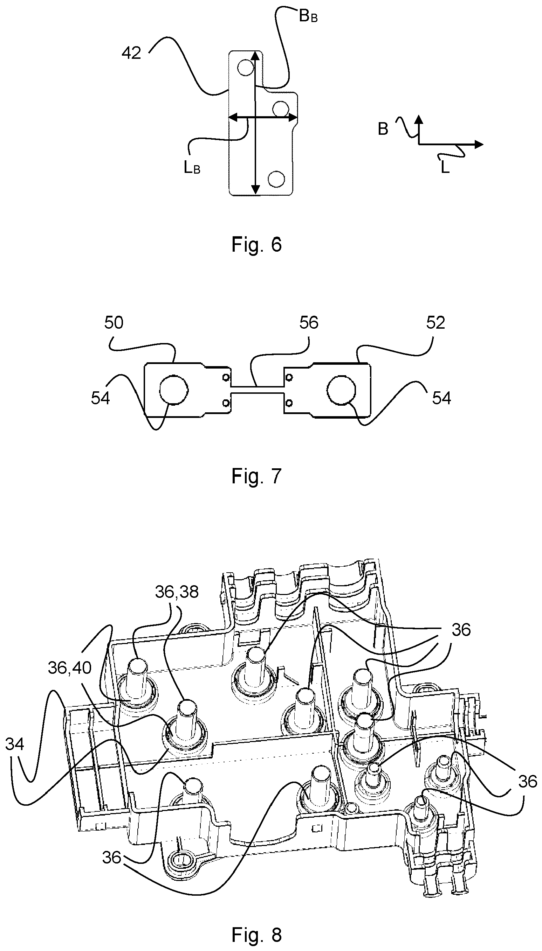

Die Sicherungsbox 30 ist in Fig. 5 in einer Innenraumansicht gezeigt und weist im Ausführungsbeispiel das bereits erwähnte Gehäuse 32 auf, welches durch zwei Gehäuse-Halbschalen 34 ausgebildet ist. Eine dieser Gehäuse-Halbschalen 34 ist in Fig. 8 gezeigt. In diese Gehäuse-Halbschalen 34 integriert sind im Ausführungsbeispiel mehrere Aufnahmen 36. Dabei sind die entsprechenden Aufnahmen durch Schrauben ausgebildet oder durch Elemente mit ähnlicher Ausgestaltung. D. h., dass eine entsprechende Aufnahme typischerweise einen ersten Abschnitt 38 aufweist, der durch einen Gewindebolzen ausgebildet ist, und einen sich daran anschließenden zweiten Abschnitt 40, der im Vergleich zum ersten Abschnitt verbreitert ist und der als eine Art Sockel dient, der in das Material des Gehäuses 32 eingebettet ist.

Drei dieser Aufnahmen 36 dienen im Ausführungsbeispiel zur Befestigung eines Verteiler-Blattes 42, welche in Fig. 6 separat und in Fig. 5 im verbauten Zustand gezeigt ist. Dieses Verteiler-Blatt 42 bildet ein Schienenende der Stromschiene 12 aus und ist mit einem Schienenstrang 44 der Stromschiene 12 verschweißt, der durch den zuvor beschriebenen Flachleiter der Hauptleitung im Hauptversorgungsstrang 6 ausgebildet ist. Verteiler-Blatt 42 und Schienenstrang 44 bilden daher zwei Abschnitte der Stromschiene 12 aus, die nicht zerstörungsfrei voneinander getrennt werden können.

Zweckdienlich sind dabei Ausführungen, bei denen sich der Schienenstrang 44 über eine breite Bs in einer Querrichtung B quer zur Längsrichtung L erstreckt, bei denen sich das Verteiler-Blatt 42 über eine Breite B_{B} in Querrichtung B erstreckt und bei denen die Breite B_{B} größer als die breite Bs ist. Dabei liegt das Verhältnis von B_{B} zu Bs bevorzugt in einem Bereich von 1,0 bis 3,0 und insbesondere in einem Bereich von 1,5 bis 2,0.

Weiter erstreckt sich das Verteiler-Blatt über eine Länge L_{B} in Längsrichtung, wobei die Breite B_{B} bevorzugt größer als die Länge L_{B} ist. Zweckdienlich sind dabei vor allem Ausgestaltungen, bei denen das Verhältnis von B_{B} zu L_{B} in einem Bereich von 1,2 bis 3,0 liegt und insbesondere bei denen das Verhältnis in einem Bereich von 1,5 bis 2,0 liegt.

Die drei Aufnahmen 36, welche zur Befestigung des Verteiler-Blattes 42 dienen, dienen zudem zur Befestigung von zwei Schmelzsicherungen 46 und einem pyrotechnischen Schutzschalter 48. Diese Sicherungselemente 46,48, also die zwei Schmelzsicherungen 46 und der pyrotechnische Schutzschalter 48, sind somit direkt mit dem Verteiler-Blatt 42 verbunden und damit direkt mit dem Schienenende der Stromschiene 12.

Weiter erstreckt sich jedes der zuvor genannten Sicherungselemente 46,48 im Ausführungsbeispiel in der Längsrichtung L von einem Hauptleitungs-Anschluss 50 des entsprechenden Sicherungselements 46,48 zu einem Nebenleitungs-Anschluss 52 des entsprechenden Sicherungselements 46,48. Dabei sind die Hauptleitungs-Anschlüsse 50 und die Nebenleitungs-Anschlüsse 52 jeweils durch einen Anschlussarm ausgebildet mit einem Loch 54 für eine der Aufnahmen 36.

Fig. 7 zeigt exemplarisch eines der Sicherungselemente 46, welches als Schmelzsicherung 46 ausgebildet ist, allerdings ohne das Sicherungs-Gehäuse. Bei den Schmelzsicherungen 46 ist dabei jeweils ein Schmelzleiter 56 ausgebildet, der die beiden Anschlussarme der entsprechenden Schmelzsicherung 46 verbindet.

Im verbundenen Zustand bildet dann der Anschlussarm eines Sicherungselements 46,48 den Hauptleitungs-Anschluss 50 aus, der mit dem Verteiler-Blatt 42 verbunden ist, und der andere Anschlussarm bildet den Nebenleitungs-Anschluss 52 aus. Dabei sind dann auch die Nebenleitungs-Anschlüsse 52 an Aufnahmen 36 befestigt. Zudem bilden die Nebenleitungs-Anschlüsse 52 der Sicherungselemente 46 im Ausführungsbeispiel Nebenleitungs-Anschlüsse 28 für Nebenleitungen 26 aus.

Der Nebenleitungs-Anschluss 52 des Sicherungselements 48, also des pyrotechnische Schutzschalter 48, bildet dagegen im Ausführungsbeispiel keinen Nebenleitungs-Anschluss 28 für eine Nebenleitung 26 aus. Stattdessen ist dieser mit einem Verteilerblech 58 verbunden. Das Verteilerblech 58 ist dabei wiederum an mehreren Aufnahmen 36 befestigt, unter anderem an der Aufnahme 36, an der der Nebenleitungs-Anschluss 52 des Sicherungselements 48 befestigt ist. Weiterhin bildet das Verteilerblech 58 zwei Nebenleitungs-Anschlüsse 28 für Nebenleitungen 26 aus sowie zwei Anschlüsse für zusätzliche Schmelzsicherungen 62, über welche weitere Nebenleitungen 26 angebunden sind.

Alle Nebenleitungen 26 sind im Ausführungsbeispiel jeweils mit einem Kabelschuh 64 an einer der Aufnahmen 36 befestigt und hierüber mit einer der Schmelzsicherungen 46, mit dem Verteilerblech 58 oder mit einer der zusätzlichen Schmelzsicherungen 62 verbunden. Dazu weisen die Kabelschuhe 64 jeweils ein nicht explizit gezeigtes Loch für eine der Aufnahmen 36 auf.

Alle zuvor beschriebenen Befestigungen an den Aufnahmen 36 sind weiter durch Verschraubung realisiert, wobei hierfür einfache Muttern 66 auf die Aufnahmen 36 aufgeschraubt sind.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Vorrichtung
- 4: Kraftfahrzeug
- 6: Hauptversorgungsstrang
- 8: vorderer Teil
- 10: hinterer Teil
- 12: Stromschiene
- 14: Masseleitung
- 16: Isolator
- 18: Leitungsschelle
- 20: Unterboden
- 22: DC/DC-Wandler
- 24: Kontaktanschluss
- 26: Nebenleitung
- 28: Nebenleitungs-Anschluss
- 30: Sicherungsbox
- 32: Gehäuse
- 34: Gehäuse-Halbschale
- 36: Aufnahme
- 38: erster Abschnitt
- 40: zweiter Abschnitt
- 42: Verteiler-Blatt
- 44: Schienenstrang
- 46: Schmelzsicherung
- 48: pyrotechnischer Schutzschalter
- 50: Hauptleitungs-Anschluss
- 52: Nebenleitungs-Anschluss
- 54: Loch
- 56: Schmelzleiter
- 58: Verteilerblech
- 60: Anschluss
- 62: zusätzliche Schmelzsicherung
- 64: Kabelschuh
- 66: Mutter

- L: Längsrichtung
- B: Querrichtung
- Bs: Breite Schienenstrang
- Bs: Breite Verteiler-Blatt
- Ls: Länge Verteiler-Blatt

## Patentansprüche

1. Vorrichtung (2) zur elektrischen Leistungsverteilung für ein Kraftfahrzeug (4) aufweisend
- eine durch eine Stromschiene (12) gebildete Hauptleitung sowie
- eine an der Stromschiene (12) angeschlossene Sicherungsbox (30) mit mehreren Nebenleitungs-Anschlüssen (28), welche über Sicherungselemente (46,48) der Sicherungsbox (30) abgesichert sind,
wobei
- die Stromschiene (12) ein Schienenende aufweist, das in einem Gehäuse (32) der Sicherungsbox (30) angeordnet ist und
- die Sicherungselemente (46,48) entweder direkt mit dem Schienenende verbunden sind oder durch das Schienenende mit ausgebildet sind.

2. Vorrichtung (2) nach Anspruch 1,
wobei die Stromschiene (12) in einer Längsrichtung (L) langgestreckt ist und
wobei sich jedes der Sicherungselemente (46,48) in der Längsrichtung (L) von einem Hauptleitungs-Anschluss (50) des Sicherungselements (46,48) zu einem Nebenleitungs-Anschluss (52) des Sicherungselements (46,48) erstreckt.

3. Vorrichtung (2) nach Anspruch 1 oder 2,
wobei das Schienenende gebildet ist durch ein Verteiler-Blatt (42), wobei das Verteiler-Blatt (42) sowie ein Schienenstrang (44) zwei Abschnitte der Stromschiene (12) ausbilden und wobei insbesondere das Verteiler-Blatt (42) nicht zerstörungsfrei lösbar ist von dem Schienenstrang (44).

4. Vorrichtung (2) nach Anspruch 3,
wobei das Verteiler-Blatt (42) mit dem Schienenstrang (44) stoffschlüssig verbunden ist, insbesondere durch Schweißen.

5. Vorrichtung (2) nach Anspruch 3 oder 4,
wobei das Verteiler-Blatt (42) aus einem höherfesten Material besteht als der Schienenstrang (44) und wobei insbesondere der Schienenstrang (44) aus Aluminium und das Verteiler-Blatt (42) aus einer Kupferlegierung besteht.

6. Vorrichtung (2) nach Anspruch 3,
wobei die Stromschiene (12) als monolithische Stromschiene (12) ausgebildet ist.

7. Vorrichtung (2) nach einem der Ansprüche 3 bis 6,
wobei
- der Schienenstrang (44) in einer Längsrichtung (L) langgestreckt ist,
- sich das Verteiler-Blatt (42) in Längsrichtung (L) an den Schienenstrang (44) anschließt,
- sich der Schienenstrang (44) über eine Breite Bs in einer Querrichtung (B) quer zur Längsrichtung (L) erstreckt,
- sich das Verteiler-Blatt (42) über eine Breite B_{B} in Querrichtung (B) erstreckt und
- die Breite B_{B} größer als die Breite Bs ist.

8. Vorrichtung (2) nach Anspruch 7,
wobei das Verhältnis von Bs zu Bs in einem Bereich 1,0 bis 3,0 liegt und insbesondere in einem Bereich 1,5 bis 2,0.

9. Vorrichtung (2) nach Anspruch 7 oder 8,
wobei sich das Verteiler-Blatt (42) über eine Länge L_{B} in Längsrichtung (L) erstreckt und die Breite B_{B} größer als die Länge L_{B} ist.

10. Vorrichtung (2) nach einem der Ansprüche 3 bis 9,
wobei jedes der Sicherungselemente (46,48) einen Hauptleitungs-Anschluss (50) sowie einen Nebenleitungs-Anschluss (52) aufweist und wobei die Hauptleitungs-Anschlüsse (50) stoffschlüssig mit dem Verteiler-Blatt (42) verbunden sind.

11. Vorrichtung (2) nach einem der Ansprüche 1 bis 10,
wobei das Verteiler-Blatt (42) als monolithisches Verteiler-Blatt (42) ausgebildet ist, wobei jedes der Sicherungselemente (46) einen Schmelzleiter (56) aufweist und wobei das Verteiler-Blatt (42) die Schmelzleiter (56) ausbildet.

12. Vorrichtung (2) nach einem der Ansprüche 1 bis 11,
wobei die Sicherungsbox (30) ein zusätzliches Sicherungselement (48) aufweist, welches als ein pyrotechnisches Sicherungselement (48) ausgebildet ist.

13. Vorrichtung nach einem der Ansprüche 1 bis 12,
wobei die Sicherungsbox (30) mehrere Aufnahmen (36) aufweist, die mit dem Gehäuse (32) der Sicherungsbox (30) verklebt oder die in das Gehäuse (32) eingegossen sind.

14. Vorrichtung (2) nach einem der Ansprüche 1 bis 12,
wobei die Sicherungsbox (30) mehrere Aufnahmen (36) aufweist, die in dem Gehäuse (32) der Sicherungsbox (30) schwimmend gelagert sind.

15. Vorrichtung (2) nach einem der Ansprüche 1 bis 14,
wobei das Gehäuse (32) der Sicherungsbox (30) abgedichtet ist.
